# EUROPÄISCHE PATENTSCHRIFT

(11) **EP 0 982 496 B1**
(45) Veröffentlichungstag und Bekanntmachung des Hinweises auf die Patenterteilung: **03.09.2003**
(21) Anmeldenummer: 99113438.8
(22) Anmeldetag: 10.07.1999
(51) Int. Cl.: F02P 17/12, F02D 35/02, F02D 41/14, F02D 41/40

(54) **Verfahren zur Auswertung eines Ionenstromsignales einer selbstzündenden Brennkraftmaschine**
Procedure for the analysis of an ion current signal in an auto-ignited internal-combustion engine
Procédé pour l'analyse d'un signal de courant ionique dans un moteur à combustion interne à auto-allumage

(30) Priorität: 22.08.1998 DE 19838222
(43) Veröffentlichungstag der Anmeldung: 01.03.2000
(60) Teilanmeldung: 02018413.1
(73) Patentinhaber: DaimlerChrysler AG, 70567 Stuttgart (DE)
(72) Erfinder: Herweg, Rüdiger, Dr., 73734 Esslingen (DE); Koyanagi, Katsuyoshi, Dr., 73733 Esslingen (DE); Maly, Rudolf, Dr., 71065 Sindelfingen (DE); Münkel, Gerhard, 70734 Fellbach (DE); Renner, Gregor, Dr., 70619 Stuttgart (DE); Wilstermann, Hartung, 74405 Gaildorf (DE)

(56) Entgegenhaltungen:
- EP-A- 0 810 368
- EP-A- 0 864 738
- DE-A- 3 428 371
- US-A- 4 377 140
- US-A- 4 380 986
- US-A- 4 463 729

## Beschreibung

Die vorliegende Erfindung betrifft ein Verfahren zur Auswertung eines Ionenstromsignales einer selbstzündenden Brennkraftmaschine nach dem Oberbegriff des Patentanspruchs 1.

Es ist bereits ein Verfahren zur Auswertung eines Ionenstromsignales einer selbstzündenden Brennkraftmaschine bekannt (WO 86/00961), wonach eine Integration eines gemessenen Ionenstromsignales erfolgt, um beispielsweise den Rußgehalt zu bestimmen. Aus dem zeitlichen Abstand der Meßsignale soll die Drehzahl entnehmbar sein.

Es ist Aufgabe der vorliegenden Erfindung, die Auswertungsmöglichkeiten eines Ionenstromsignales zu erweitern.

Diese Aufgabe wird erfindungsgemäß gelöst durch ein Verfahren nach Anspruch 1, wonach eine Rußbestimmung durch eine Auswertung des zeitlichen Verlaufes des Ionenstromsignales nach einer Einspritzung erfolgt.

Es hat sich gezeigt, daß durch die Auswertung des Zeitverlaufes des Ionenstromsignales eine vergleichsweise genaue Rußbestimmung möglich ist.

Bei dem Verfahren nach Anspruch 1 erfolgt die Auswertung, indem der zeitliche Verlauf durch Bestimmung der Parameter einer mit der Zeit fallenden Exponential- bzw. e-Funktion angenähert wird.

Durch die Bestimmung dieser Parameter kann eine Rußbestimmung mit vergleichsweise geringem Aufwand bei der Auswertung erfolgen. Die Bestimmung der Parameter kann beispielsweise mit den Methoden erfolgen, die aus der Parameteridentifikation der Regelungstechnik bekannt sind.

Bei dem Verfahren nach Anspruch 3 wird eine übermäßige Rußbildung erkannt, wenn wenigstens einer der Parameter um mehr als einen bestimmten Betrag von einem vorgegebenen Sollwert abweicht.

Bei dem Verfahren nach Anspruch 4 wird eine übermäßige Rußbildung erkannt, wenn bei der Ermittlung der Abweichungen der Meßpunkte von der sich aus den Parametern ergebenden Kurve sich ein Fehler bei der Bestimmung wenigstens eines Parameters ergibt, der größer ist als ein bestimmter Wert.

Bei der Bestimmung der Parameter werden diese aus den Meßpunkten heraus berechnet. Aufgrund der Zahl der Meßpunkte ergibt sich ein überstimmtes Gleichungssystem. Die Parameter werden dann so ermittelt, daß sich eine Kurve ergibt, an der die Meßpunkt möglichst optimal anliegen. Bei der im Zusammenhang mit Anspruch 1 erwähnten Parameteridentifikation erfolgt die Bestimmung der Parameter beispielsweise unter dem Gesichtspunkt der kleinsten Fehlerquadrate. Diese Fehler geben letztlich ein Maß dafür, wie gut sich die Meßpunkte durch die Kurve repräsentieren lassen. Wenn der Fehler zu groß wird, zeigt sich, daß sich eventuell gar keine Parameter mehr sinnvoll bestimmen lassen.

Bei der vorliegenden Anwendung zeigt sich, daß die Meßpunkte des Ionenstromes bei einer übermäßigen Rußbildung sich nicht mehr sinnvoll durch eine e-Funktion annähern lassen. Bei der Bestimmung der Parameter mittels der Parameteridentifikation kann dies beispielsweise erkannt werden, indem die Fehlerquadrate ausgewertet werden. Wenn diese Fehlerquadrate bestimmte Werte übersteigen, kann dann auf eine übermäßige Rußbildung erkannt werden.

Ein Ausführungsbeispiel der Erfindung ist in der Zeichnung näher dargestellt. Es zeigt dabei im einzelnen:
- Fig. 1:: den Zeitverlauf eines Ionenstromsignals und eines Einspritzsignals und
- Fig. 2-5:: verschiedene Ausführungsbeispiele von Verfahren zur Auswertung des gemessenen Ionenstromsignals.

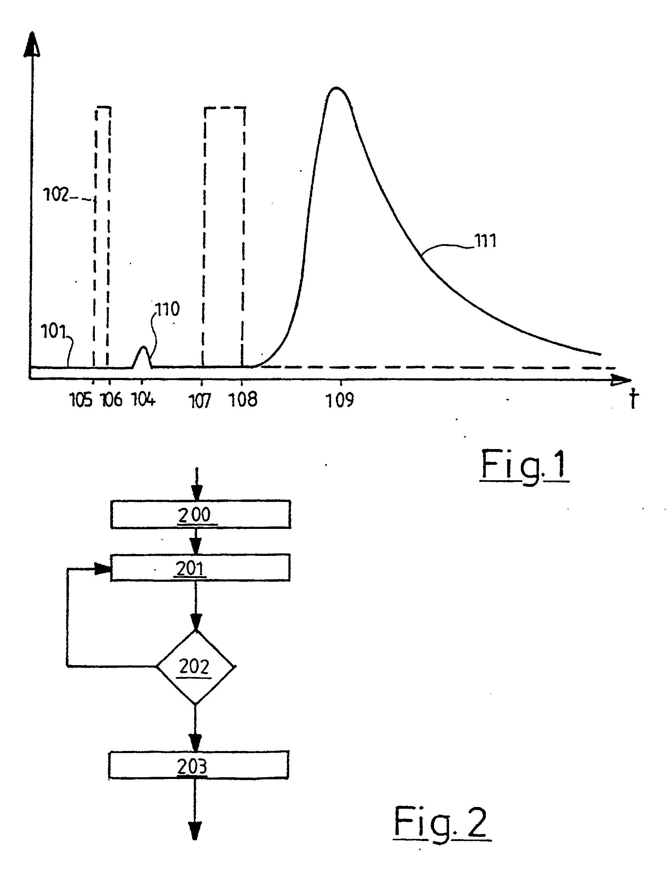

Figur 1 zeigt den Zeitverlauf eines Ionenstromsignals 101, das als durchgezogene Linie dargestellt ist, und eines Einspritzsignals 102, das als gestrichelte Linie dargestellt ist. Es zeigt sich, daß nach einer erfolgten Einspritzung mit einem gewissen Zeitversatz ein Maximum des Ionenstromsignales auftritt.

In dem Schritt 200 wird ein Zeitgeber gestartet, wenn der Beginn eines Einspritzvorganges erkannt wurde. In der Darstellung der Figur 1 entspricht dies dem Zeitpunkt 105 für die Voreinspritzung sowie dem Zeitpunkt 107 für die Haupteinspritzung.

In dem Schritt 201 wird der Zeitgeber erhöht

In dem Schritt 202 wird dann überprüft, ob der gemessenen Ionenstrom abnimmt oder weiter zunimmt. Dies kann beispielsweise erfolgen, indem unmittelbar ein aufgenommener Meßwert mit einem vorher aufgenommenen Meßwert verglichen wird. Diese Überprüfung kann aber auch durch eine geeignete Mittelwertbildung vorgenommen werden, indem mehrere Meßwerte zusammengefaßt werden, um Fehlinterpretationen aufgrund einzelner Ausreißer in den Meßwerten zu vermeiden.

Wenn in dem Schritt 202 erkannt wurde, daß der Ionenstrom weiter zunimmt, erfolgt ein Übergang zu dem Schritt 201, in dem der Zeitgeber weiterhin erhöht wird.

Wenn in dem Schritt 202 erkannt wurde, daß der Ionenstrom abnimmt, erfolgt ein Übergang zu dem Schritt 203, in dem aufgrund des festgestellten Wertes des Zeitgebers aus der Zeitdifferenz zwischen dem Beginn des Einspritzvorganges und dem festgestellten lokalen Maximum des Ionenstromsignals der Zündverzug abgeleitet wird.

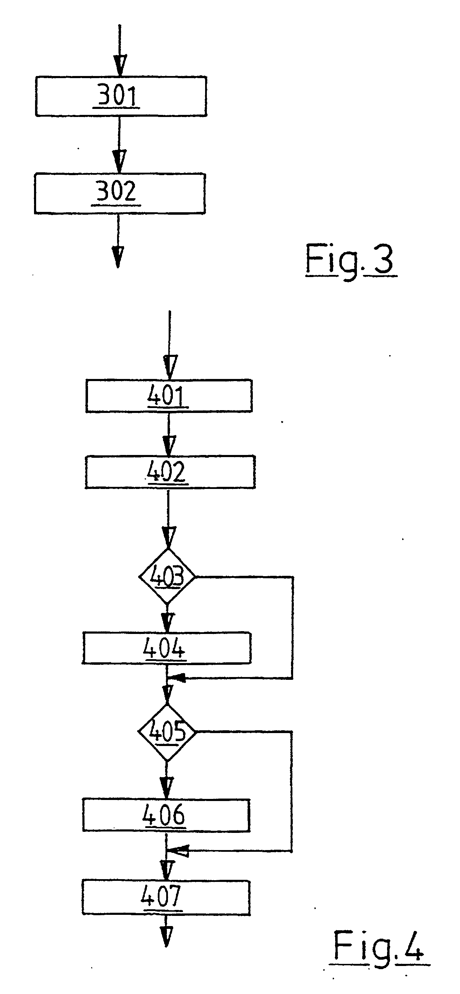

Figur 3 zeigt ein weiteres Ausführungsbeispiel eines Verfahrens, bei dem in einem Schritt 301 eine Auswertung des gemessenen Ionenstromes nach einer Voreinspritzung erfolgt.

In Abhängigkeit von der Auswertung des gemessenen Ionenstromes nach der Voreinspritzung können entsprechend dem Schritt 302 die Parameter der Haupteinspritzung gesteuert werden. Dies gilt insbesondere hinsichtlich Einspritzmenge und Einspritzzeitpunkt. Es ist ebenso möglich, in dem Schritt 302 die Auswertung gemessener Ionenströme nach vorangegangenen Haupteinspritzungen zu berücksichtigen, um eine Adaption der Parameter der Haupteinspritzung vorzunehmen.

Figur 4 zeigt ein Verfahren, bei dem aus dem zeitlichen Verlauf des Ionenstromsignales nach einer Einspritzung eine Rußbestimmung erfolgt.

Vorteilhaft werden dazu in dem Schritt 401 Meßwerte des Ionenstromes aufgenommen, nachdem das lokale Maximum erreicht wurde bis zum Öffnen des Auslaßventiles.

In dem Schritt 402 werden zu den aufgenommenen Meßwerten die Parameter einer Exponentialfunktion beispielsweise mit der Methode der Parameteridentifikation ermittelt. Dabei werden die Parameter der e-Funktion so bestimmt, daß bei den Meßwerten bezogen auf die sich aus den Parametern ergebende Kurve die Quadrate der Abweichungen der Meßwerte von der Kurve minimiert werden. Diese Fehlerquadrate sind somit auch ein Maß dafür, wie gut die Meßwerte durch eine e-Funktion angenähert werden können.

In dem Schritt 403 werden die ermittelten Parameter der e-Funktion mit vorgegebenen Sollwerten verglichen. Weichen die ermittelten Parameter um mehr als einen bestimmten Betrag von zugehörigen Sollwerten ab, erfolgt ein Übergang zu dem Schritt 404, in dem eine entsprechende Kennung gesetzt wird. Wenn die ermittelten Parameter um nicht mehr als einen bestimmten Betrag von den entsprechenden Sollwerten abweichen, erfolgt ein Übergang zu dem Schritt 405.

In dem Schritt 405 wird überprüft, ob sich die Meßwerte durch die Kurve, die sich aus den ermittelten Parametern ergibt, hinreichend gut annähern läßt. Es hat sich nämlich gezeigt, daß bei einer Rußbildung die Meßkurve des gemessenen Ionenstromes von dem Verhalten einer Exponentialfunktion abweicht. Bei der Bestimmung der Parameter einer e-Funktion mit der Methode der Parameteridentifikation kann dies erkannt werden, indem die Fehlerquadrate ausgewertet werden. Wenn die ermittelten Fehlerquadrate größer werden, d.h. wenn der Fehler bei der Bestimmung größer ist als ein bestimmter Wert, erfolgt ein Übergang zu dem Schritt 406, in dem eine entsprechende Kennung gesetzt wird. Andernfalls erfolgt ein Übergang zu dem Schritt 407.

In dem Schritt 407 erfolgt eine Auswertung der ggf. in den Schritten 404 und/oder 406 gesetzten Kennungen. Es ist dabei ersichtlich, daß auch nur eine der Prüfungen der Schritte 403 bzw. 405 vorgenommen werden kann.

In dem Schritt 407 kann dann eine Erkennung einer übermäßigen Rußbildung erfolgen. Ggf. kann auch das Ausmaß der Rußbildung erkannt werden.

Zur Erkennung der Rußbildung ist es auch möglich, zusätzlich zu der vorher beschriebenen Auswertung die Lage und Höhe der Signalmaxima bezogen auf den Einspritzzeitpunkt zu bewerten.

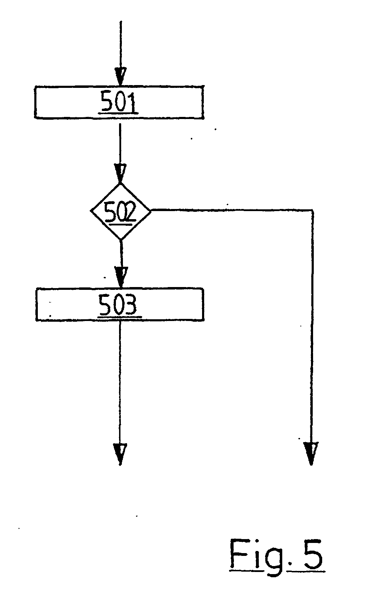

Bei der Darstellung nach Figur 5 wird in dem Schritt 501 das Ionenstromsignal integriert und hinsichtlich der Fläche bewertet und/oder die Lage und/oder Höhe der Maxima des Ionenstromsignales ausgewertet. Nach dieser Auswertung wird zumindest eine dieser Größen in dem Schritt 502 mit einem oder mehreren Sollwerten verglichen. Insbesondere wenn die Höhe der Maxima bestimmte Schwellwerte überschreitet oder wenn die Flächen unter den Kurven bestimmte Schwellwerte überschreiten, kann eine Erkennung einer Dauereinspritzung in wenigstens einem Zylinder erfolgen.

Wenn in dem Schritt 502 eine Dauereinspritzung erkannt worden ist, erfolgt ein Übergang zu dem Schritt 503, in dem die Einspritzung zumindest in den Zylinder unterbunden wird, bei dem eine Störung erkannt wurde.

Durch die Auswertung der entsprechenden Größen kann beispielsweise auch erkannt werden, wenn gar keine Einspritzung in einzelne Zylinder erfolgt.

Das Ausführungsbeispiel des Verfahrens erweist sich als besonders vorteilhaft bei Dieselmotoren, deren Energieversorgung realisiert wird, indem die einzelnen Zylinder bei einem Einspritzvorgang mit einem Druckreservoir verbunden werden. Derartige Systeme sind als Common-Rail-Systeme bekannt. Wenn bei einem solchen System ein Ventil hängt, kann vorteilhaft eine Dauereinspritzung mit einer möglichen Schädigung der Brennkraftmaschine unterbunden werden.

## Patentansprüche

1. Verfahren zur Rußbestimmung mittels Auswertung eines Ionenstromsignales einer selbstzündenden Brennkraftmaschine, wobei eine Auswertung eines zeitlichen Verlaufes des Ionenstromsignales (110, 111) nach einer Einspritzung erfolgt,
**dadurch gekennzeichnet, daß** der zeitliche Verlauf des Ionenstromsignales durch Bestimmung der Parameter einer mit der Zeit fallenden Exponentialfunktion angenähert wird (402, 407).

2. Verfahren nach Anspruch 1,
**dadurch gekennzeichnet, daß** die Bestimmung der Parameter der Exponentialfunktion mittels der Methode der kleinsten Fehlerquadrate erfolgt.

3. Verfahren nach Anspruch 1,
**dadurch gekennzeichnet, dass** bei Abweichung wenigstens eines der Parameter um mehr als einen bestimmten Betrag von einem vorgegebenen Sollwert (ferner 3,4 104) eine übermäßige Rußbildung erkannt wird.

4. Verfahren nach Anspruch 1 oder 3,
**dadurch gekennzeichnet, daß** bei Abweichung der Meßkurve des Ionenstromsignales von dem Verlauf der Exponentialfunktion auf einer übermäßige Rußbildung erkannt wird, wenn diese Abweichung einen bestimmten Wert (405, 406, 407) überschreitet.

5. Verfahren nach Anspruch 4,
**dadurch gekennzeichnet, daß** sich die Abweichung der Meßkurve von der Exponentialfunktion aus den Quadraten der Abweichungen der Messwerte von der Exponentialfunktion ergibt.

## Claims

1. Method for determining soot formation by evaluating an ion flow signal of a self-igniting combustion engine, in which the time variation of the ion flow signal (110, 111) is evaluated after an injection,
**characterised in that**
the time variation of the ion flow signal is approximated by determining the parameters of an exponential function which decreases with time (402, 407).

2. Method according to Claim 1,
**characterised in that**
the parameters of the exponential function are determined by the least squares method.

3. Method according to Claim 1,
**characterised in that**
if at least one of the parameters deviates by more than a given amount from a specified nominal value (further 3, 4 104), excessive soot formation is recognised.

4. Method according to Claims 1 or 3,
**characterised in that**
if the measurement curve of the ion flow signal deviates from the course of the exponential function, excessive soot formation is recognised when this deviation is greater than a certain value (405, 406, 407).

5. Method according to Claim 4,
**characterised in that**
the deviation of the measurement curve from the exponential function is obtained from the squares of the deviations of the measured values from the exponential function.

## Revendications

1. Procédé de détermination de suie au moyen d'une évaluation d'un signal de courant ionique dans un moteur à combustion interne à auto-allumage, selon lequel une évaluation d'une variation dans le temps du signal (110, 111) de courant ionique est réalisée après une injection, **caractérisé en ce que** la variation dans le temps du signal de courant ionique est approximée (402, 407) par détermination des paramètres d'une fonction exponentielle qui décroît dans le temps.

2. Procédé selon la revendication 1, **caractérisé en ce que** la détermination des paramètres de la fonction exponentielle est réalisée au moyen du procédé des moindres carrés.

3. Procédé selon la revendication 1, **caractérisé en ce qu'**on identifie une formation excessive de suie dans le cas de l'écart d'au moins un paramètre de plus d'une valeur déterminée par rapport à une valeur de consigne prédéterminée (en outre 3, 4 104).

4. Procédé selon la revendication 1 ou 3, **caractérisé en ce qu'**on identifie une formation excessive de suie dans le cas d'un écart de la courbe de mesure du signal de courant ionique par rapport à la variation de la fonction exponentielle lorsque cet écart dépasse une valeur déterminée (405, 406, 407).

5. Procédé selon la revendication 4, **caractérisé en ce que** l'écart entre la courbe de mesure et la fonction exponentielle est obtenue à partir des carrés des écarts de valeurs de mesure par rapport à la fonction exponentielle.
